(19) Europäisches Patentamt / European Patent Office / Office européen des brevets

(11) **EP 4 652 723 B1**

(12) **EUROPEAN PATENT SPECIFICATION**

(45) Date of publication and mention of the grant of the patent:
**29.07.2026 Bulletin 2026/31**

(21) Application number: **23701411.3**

(22) Date of filing: **19.01.2023**

(51) International Patent Classification (IPC):
*H04L 67/51* $^{(2022.01)}$    *H04W 4/70* $^{(2018.01)}$

(52) Cooperative Patent Classification (CPC):
**H04L 67/51; H04W 4/70**

(86) International application number:
**PCT/EP2023/051252**

(87) International publication number:
**WO 2024/153339 (25.07.2024 Gazette 2024/30)**

(54) **REGISTRATION AND DISCOVERY OF RESOURCES**

REGISTRIERUNG UND ENTDECKUNG VON RESSOURCEN

ENREGISTREMENT ET DÉCOUVERTE DE RESSOURCES

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**26.11.2025 Bulletin 2025/48**

(73) Proprietor: **Telefonaktiebolaget LM Ericsson (publ)**
**164 83 Stockholm (SE)**

(72) Inventors:
• **JIMÉNEZ, Jaime**
  **02780 ESPOO (FI)**
• **LAARI, Petri**
  **02770 ESPOO (FI)**
• **NOVO DIAZ, Oscar**
  **00180 HELSINKI (FI)**

(74) Representative: **Ericsson Patent Development**
**Torshamnsgatan 21-23**
**164 80 Stockholm (SE)**

(56) References cited:
**US-A1- 2018 032 572**

• **KHAEFI MUHAMMAD RIZAL ET AL: "Bloom filter based CoAP discovery protocols for distributed resource constrained networks", 2015 IEEE 13TH INTERNATIONAL CONFERENCE ON INDUSTRIAL INFORMATICS (INDIN), IEEE, 22 July 2015 (2015-07-22), pages 448 - 453, XP033218818, DOI: 10.1109/INDIN.2015.7281776**
• **NIKBAZM ROJIA ET AL: "Agent-based resource discovery in cloud computing using bloom filters", 2014 4TH INTERNATIONAL CONFERENCE ON COMPUTER AND KNOWLEDGE ENGINEERING (ICCKE), IEEE, 29 October 2014 (2014-10-29), pages 352 - 357, XP032711146, DOI: 10.1109/ICCKE.2014.6993399**

**Description**

TECHNICAL FIELD

The invention relates to a method for registering one or more resources hosted by a first communications device, a method for discovering resources hosted by one or more first communications devices, a first communications device for registering one or more resources hosted by the first communications device, a second communications device for discovering resources hosted by one or more first communications devices, corresponding computer programs, corresponding computer-readable data carriers, and corresponding data carrier signals.

BACKGROUND

Internet of Things (IoT) devices of an IoT system may host a big number of resources. The discovery of such resources by an entity, such as a client device, may be challenging since a direct discovery of resources is not practical due to sleeping nodes (e.g., IoT devices) or networks where multicast traffic is inefficient. These problems can be solved by employing an entity called Resource Directory (RD), which comprises information about resources hosted by the IoT devices, thus allowing lookups of the resources. The RD allows to perform queries and fetch an entire collection of the resources of the IoT system without having to query each individual resource and each individual IoT device.

Constrained Application Protocol (CoAP) or Hypertext Transfer Protocol (HTTP) may be used as communications protocols between IoT devices, RD, and client devices. A message for registering resources may comprise the following attributes: an identifier of the IoT device that hosts the resource to register (e.g., ep = node1), an identifier of the resource (rt = temperature or light), an indication of a format of the content (ct = 40 or 41, wherein 40 indicates application/link-format and 41 indicates application/xml), and an indication of an interface used to transmit the resource information (if = sensor). The message may also comprise a series of links to the resources. A registration message sent by an IoT device with identifier "node1" to the RD to register the resources temperature and light may, for example, be the following:

```
POST coap://company.com/rd?ep=node1
ct:40
</sensors/temp>;ct=41;rt=temperature-c;if=sensor;
</sensors/light>;ct=41;rt=light;if=sensor
```

A message sent by a CoAP client device to the RD for discovering all resources of a type temperature may for example be:
coaps://company.com/rd-lookup?rt=temperature
wherein

- "rd-lookup" indicates the type of operation, i.e., a discovery of the resources in the RD;
- "rt" indicates the type of resource that the CoAP client device wants to discover.

Further filtering parameters may be added after the "?" symbol.

Further information on the RD may be found in Internet Engineering Task Force (IETF) RFC 9176 (2022).

US 2018/032572 A1 relates to a method for publishing semantics related resource identifiers, wherein the method includes adding a key word to an identifier of a semantics related resource and publishing the identifier to at least one of a sibling node and a child node. Further, US 2018/032572 A1 relates to a method including using a Bloom filter to publish a semantics related resource.

KHAEFI MUHAMMAD RIZAL ET AL: "Bloom filter based CoAP discovery protocols for distributed resource constrained networks", IEEE, 22 July 2015, relates to a discovery scheme based on Partitioned Bloom filters (PBF) called Constrained Application Protocol (CoAP)-PBF to improve CoAP resource discovery by having each device sends resource summary with PBF.

NIKBAZM ROJIA ET AL: "Agent-based resource discovery in cloud computing using bloom filters", IEEE, 29 October 2014, relates to a method of Agent-based resource discovery using Bloom filter.

SUMMARY

An object of the invention is to provide an improved alternative to the above techniques and prior art. More specifically, it is an object of the invention to provide improved registration and discovery of resources hosted by one or more first communications devices. This and other objects of the invention are achieved by means of different aspects of the invention, as defined by the independent claims. Embodiments of the invention are characterized by the dependent claims.

According to a first aspect of the invention, a method for registering one or more resources hosted by a first communications device is provided according to claim 1. The method is performed by a first communications device. The method comprises calculating a Bloom filter (BF). The BF indicates the one or more resources hosted by the first communications device. The method further comprises transmitting, to a database, a request for registering the one or more resources. The request comprises the BF.

According to a second aspect of the invention, a method for discovering resources hosted by one or more first communications devices is provided according to claim 7. The method is performed by a second communications device. The method comprises transmitting, to a database, a request for discovering the resources. The method further comprises receiving, from the database, a response. The response comprises one or more BFs. Each of the one or more BFs indicates resources hosted by a respective first communications device of the one or more first communications devices.

According to a third aspect of the invention, a first communications device for registering one or more resources hosted by the first communications device is is provided according to claim 10. The first communications device comprises a processor and a memory. The memory has stored thereon instructions executable by the processor. The instructions, when executed by the processor, cause the first communications device to calculate a BF. The BF indicates the one or more resources hosted by the first communications device. The instructions, when executed by the processor, cause the first communications device to transmit, to a database, a request for registering the one or more resources. The request comprises the BF.

According to a fourth aspect of the invention, a second communications device for discovering resources hosted by one or more first communications devices is provided according to claim 11. The second communications device comprises a processor and a memory. The memory has stored thereon instructions executable by the processor. The instructions, when executed by the processor, cause the second communications device to transmit, to a database, a request for discovering the resources. The instructions, when executed by the processor, cause the second communications device to receive, from the database, a response comprising one or more BFs. Each of the one or more BFs indicates resources hosted by a respective first communications device of the one or more first communications devices.

According to a fifth and sixth aspects of the invention, there are provided computer programs according to claims 12 and 13.

According to a seventh aspect of the invention, there is provided a computer-readable data carrier according to claim 14.

The computer-readable data carrier has stored thereon the computer program according to an embodiment of the fifth or sixth aspect of the invention.

According to an eighth aspect of the invention, there is provided a data carrier signal according to claim 15. The data carrier signal carries the computer program according to the fifth or the sixth aspect of the invention.

Certain embodiments may provide one or more of the following technical advantages:

- reduce the amount of data transmitted for registering and discovering resources, since the BF has a smaller size than a message comprising a list of identifiers of all resources;
- allow a fast registration and discovery of the resources hosted by one or more first communications devices (e.g., IoT devices), since if k is the number of hash functions applied to a name associated with a resource, the time needed either to add resources or to check whether a resource is in the BF is a fixed constant, O(k), independent of the number of items already in the BF . Moreover, in a hardware implementation the k lookups are independent and can be parallelized.

## BRIEF DESCRIPTION OF THE DRAWINGS

For better understanding of the present disclosure, and to show more readily how the invention may be carried into effect, reference will now be made, by way of example, to the following drawings, in which:

Figure 1 shows an example scenario comprising three first communications devices, a database, and a second communications device, according to embodiments of the invention;

Figure 2 shows a flow chart illustrating a method performed by a first communications device for registering one or more resources hosted by the first communications device, according to embodiments of the invention;

Figure 3 shows a flow chart illustrating a method performed by a second communications device for discovering resources hosted by one or more first communications devices, according to embodiments of the invention;

Figure 4 shows an exchange of messages between a first communications device, a database, and a second communications device, according to embodiments of the invention;

Figure 5 shows a block diagram depicting a first communications device according to embodiments of the invention; and

Figure 6 shows a block diagram depicting a second communications device according to embodiments of the invention.

## DETAILED DESCRIPTION

Embodiments will be illustrated herein with reference to the accompanying drawings. These embodiments are provided by way of example so that this disclosure will be thorough and complete, and will fully convey the scope of the inventive concept to those skilled in the art.

Registration and discovery of resources hosted by Internet of Things (IoT) devices may be managed by an entity, such as a Resource Directory (RD), which stores information about the resources hosted by the IoT devices. On one hand, the amount of memory needed to store the information in the entity may be high, due to the number of resources hosted by the IoT devices. On the other hand, a resource lookup may return an extensive list of resources, i.e., a query from a client device to the RD may generate a response comprising information on the resources in a textual format requiring a significant amount of space to be stored on the client device side. Moreover, the response may comprise information about resources not required by the client device at the time the response is received, thus causing the response to occupy more space than necessary.

The invention disclosed herein makes it possible to improve registration of one or more resources hosted by a first communications device, and discovery of resources hosted by one or more first communications devices. The registration may be achieved by calculating a Bloom filter (BF) indicating the one or more resources hosted by the first communications device, and transmitting, to a database, a request for registering the one or more resources, wherein the request comprises the BF. The discovery may be achieved by transmitting, to the database, a request for discovering of the resources, and receiving, from the database, a response comprising one or more BFs, wherein each of the one or more BFs indicates resources hosted by a respective first communications device of the one or more first communications devices.

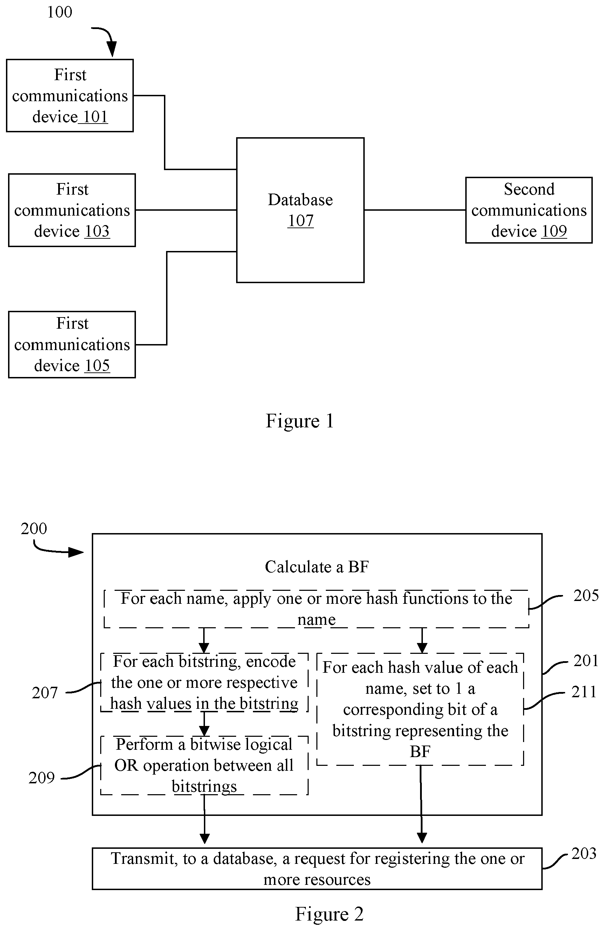

Figure 1 schematically shows an example of a system 100 in which a solution according to embodiments of the invention may be implemented. The system 100 of Figure 1 comprises three first communications devices 101, 103, and 105, a database 107, and a second communications device 109.

The first communications devices 101, 103, 105 may be constrained devices, such as IoT devices. Examples of IoT devices 101, 103, 105 comprise home appliances or vehicles, comprising one or more sensors, such as temperature, humidity, pressure, and proximity sensors. In the present context, a constrained device is a device with limited characteristics such as memory, processing capabilities, available power and energy, due to cost constraints and/or physical constraints. A definition of constrained devices may be found in IETF RFC 7228 (2014).

The database 107 is an entity that stores information about resources hosted by the one or more first communications devices 101, 103, 105 and allows lookup of the resources hosted by the first communications devices 101, 103, 105. The database 107 may be any device with computing, storage, and network connectivity. The database 107 may be hosted by a mobile operator or in a cloud system. The database may be an RD allowing discovery, creation, maintenance, removal of registrations, and lookup of the registered resources. Further information on the RD may be found in IETF RFC 9176 (2022).

The second communications device 109 may be a client device, i.e., any device with computing, storage, and network connectivity, which can discover resources hosted by the first communications devices 101, 103, 105. The second communications device 109 may be a constrained device, such as an IoT device.

The first communications devices 101, 103, 105, and the second communications device 109 may communicate with the database 107 using a Representational State Transfer (REST) based protocol, such as CoAP or then HTTP. The first communications devices 101, 103, 105 may be Lightweight M2M (LwM2M) clients or a CoAP client.

Figure 2 shows a method 200 for registering one or more resources hosted by a first communications device 101, 103, 105. The method 200 may be performed by the first communications device 101, 103, 105. The first communications device 101, 103, 105 may be an IoT device. According to an embodiment, the first communications device 101, 103, 105 may be an LwM2M device.

The method 200 comprises calculating 201 a BF. The BF indicates the one or more resources hosted by the first communications device. In other words, each of the first communications device 101, 103, 105 calculates a BF, wherein the BF indicates the one or more resources hosted by the first communications device. The BF may be represented by a bit array or a bitstring of a length m. The one or more resources may be any resource hosted by the first communications device 101, 103, 105, such as temperature, pressure, or humidity. The one or more resources may be resources according to the LwM2M resource model where each piece of information made available by an LwM2M client (e.g., a first communications device 101, 103, 105) is a resource. Further information on the LwM2M resource model may be found in Joaquin Prado, "OMA lightweight M2M resource model", IAB IoT Semantic Interoperability Workshop, 2016. The one or more resources may be HTTP web resources.

The BF may be calculated and configured during a manufacturing phase of the first communications device 101, 103, 105, or during operation of the first communications device 101, 103, 105, i.e., when in use. The BF may be refreshed periodically and/or when the resources are updated.

The method 200 further comprises transmitting 203 a request for registering the one or more resources. The request is transmitted to a database 107 and comprises the calculated BF. According to an embodiment, the database 107 may be an RD. The request may be a CoAP or HTTP POST message.

According to an embodiment, each of the one or more resources may have a unique name. The unique name may be comprised in a namespace. A namespace is a set of names that are used to identify and refer to the one or more resources. A name may be a string comprising alphanumeric characters. Examples of names associated with resources are "Water Meter Customer Leakage Alarm", "Water Meter Reverse Flow Alarm", and " Water Meter Empty Pipe Alarm".

According to an embodiment, the one or more resources may be represented by Internet Protocol for Smart Objects (IPSO) objects. The Internet Protocol for Smart Objects (IPSO) defines an object model, based on the Open Mobile Alliance LwM2M, to achieve interoperability for data transmitted between devices and application software. A common set of object definitions enables software to interact with any device. An IPSO object is represented by three unsigned 16-bit integers separated by the character '/' in the form Object ID/Instance ID/Resource ID, wherein Object ID, Instance ID, and Resource ID, are integers. For example, an object temperature sensor that measures a temperature value, may be represented by 3303/0/5700, wherein 3303 is the Object ID of the temperature sensor, 0 is the Instance ID, and 5700 is the last or current value measured from the sensor.

Further information on the IPSO objects may be found in Jaime Jimenez, Michael Koster, and Hannes Tschofenig, "IPSO smart objects", Position paper for the IoT Semantic Interoperability Workshop, IPSO Alliance, 2016.

According to an alternative embodiment, the one or more resources may be represented by LwM2M objects, Open Connectivity Foundation (OCF) objects, or Thread objects, and use respective namespaces. According to an embodiment, the request for registering the one or more resources comprises an indication of the namespace and the name of each of the one or more resources.

According to an embodiment, the BF may be calculated by applying 205, for each resource, one or more hash functions to the name associated with the resource to obtain one or more respective hash values. The hash value is a value comprised between 0 and a length of the BF minus 1. In other words, if the length of the BF is m, each hash function takes the name of the resource as input and generates a fixed-size output called hash value comprised in the range [0, m-1]. For example, two hash functions, h1 and h2, may be applied to the name "temp" associated with the resource temperature. The hash function h1 may generate the hash value 5 (i.e., h1(temp) = 5) and the hash function h2 may generate the hash value 12 (i.e., h2(temp) = 12). The number of hash functions (k) applied to the name of each resource may depend on the length of the BF (m) and on the number of resources (n) to be inserted in the BF. Further information on how m, n, and k, may be selected is provided below. Examples of hash functions comprise secure hash algorithm x (SHAx), which transforms input of arbitrary length to output of x-bit length, message-digest algorithm 5 (MD5), and hash-based message authentication code (HMAC).

According to an embodiment, each name may be associated with a bitstring. A bitstring is a sequence of bits (binary digits). The bitstring may be an identifier of the resource associated with the name. According to an embodiment, the length of the bitstring may be equal to the length of the BF. For example, a resource, such as temperature, may be associated with the bitstring of 16 bits, such as ID_temp = [0000 0100 0000 1000]. The bitstring associated with the name may be obtained by encoding 207 into the bitstring the one or more hash values obtained by applying the one or more hash functions to each name. For example, if two hash functions, h1 and h2, are applied to the name "temp" associated with the resource temperature, wherein the hash function h1 generates the hash value 5 (i.e., h1(temp) = 5) and the hash function h2 generates the hash value 12 (i.e., h2(temp) = 12), the bitstring ID_temp associated with the resource temperature is ID_temp = [0000 0100 0000 1000], obtained by setting to 1 the fifth and the twelfth bit (note that the first bit of the bitstring has index 0). If a hash function generates a value v higher than m-1, a modulo operation should be applied to v, i.e., v mod m, so that the obtained result corresponds to an index of the BF within the bounds of the BF.

According to an embodiment, the BF may be further obtained by, for each bitstring associated with a name, encoding 207 into the bitstring the one or more hash values obtained by applying the one or more hash functions to each name, and performing 209 a bitwise logical OR operation between all bitstrings to obtain a bitstring representing the BF.

According to an embodiment, the encoding 207 of the one or more respective hash values in the bitstring comprises, for each hash value, setting to 1 a corresponding bit of the bitstring associated with the name. For example, consider a first communications device 101 attempting to register a resource temperature and a resource humidity associated with the names "temp" and "hum", respectively, and hosted by a first communications device 101, 103, 105, then

- for the resource temperature, the first communications device 101 applies a first hash function h1 to the name "temp" generating the hash value 5, and a second hash function h2 to the name "temp" generating the hash value 12. A bitstring ID_temp may be obtained by setting to 1 the fifth and the twelfth bit of the bitstring, i.e., ID_temp = [0000 0100 0000 1000].
- for the resource humidity, the first communications device 101 applies the first hash function h1 to the name "hum" generating the hash value 9 and the second hash function h2 to the name "hum" generating the hash value 15. A bitstring ID_hum may be obtained by setting to 1 the ninth and the fifteenth bit of the bitstring, i.e., ID_hum = [0000 0000 0100 0001].

The bitstring of the BF may be obtained by performing a bitwise logical OR operation between ID_temp and ID_hum, i.e., BF = ID_temp OR ID_hum = [0000 0100 0100 1001].

According to an alternative embodiment, the BF is obtained by setting 211 to 1 a bit of the bitstring representing the BF, wherein the bit set to 1 corresponds to each hash value of each name. Referring to the previous example, a bitstring representing the BF may be obtained by setting to 1 the fifth, ninth, twelfth, and fifteenth bits of the bitstring, i.e., BF = [0000 0100 0100 1001].

It will be appreciated that the method 200 may comprise additional, alternative, or modified, steps in accordance with what is described throughout this disclosure.

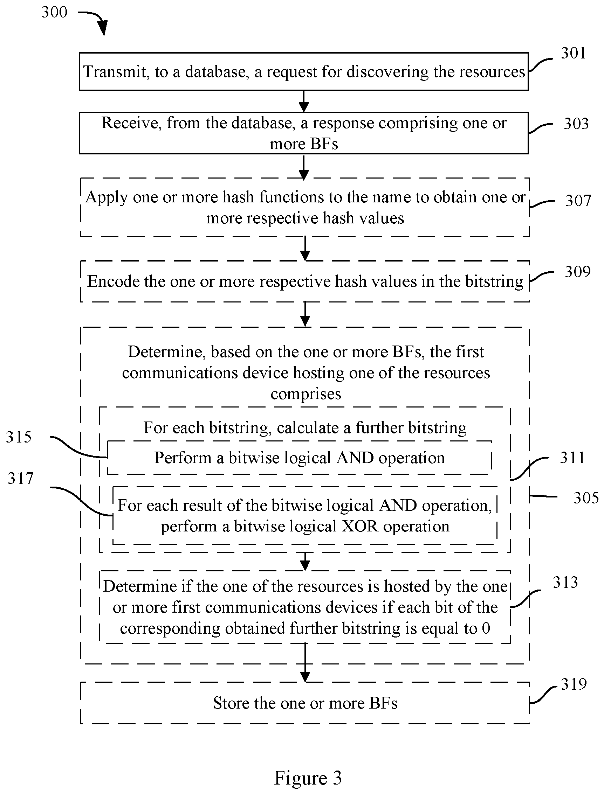

Figure 3 shows a method 300 for discovering resources hosted by one or more first communications devices 101, 103, 105. The method 300 may be performed by a second communications device 109. According to an embodiment, the second communications device 109 may be a client device.

The method 300 comprises transmitting 301, to a database 107, a request for discovering the resources. The database 107 may be an RD. The request may be a CoAP or HTTP GET message. The resources may, for example, be temperature, pressure, or humidity, measurements obtained by the first communications device 101, 103, 105. The request may comprise an indication to discover all resources. For example, an indication may be the string "all",

The method 300 further comprises receiving 303, from the database 107, a response comprising one or more BFs. Each of the one or more BFs indicates resources hosted by a respective first communications device of the one or more first communications devices 101, 103, 105. The response may be a CoAP or HTTP message. The response message may, in case of a successful request, comprise a status response code, such as 2.05 (Content) or 200 (OK). The BF may be represented by a bit array or a bitstring of length m. If the resource does not exist at the time of the request, the response message may comprise a status response code, such as 2.02 (Deleted) or 4.00 (Bad Request). Further CoAP status response codes may be found in IETF RFC 7252 (2014).

According to an embodiment, each of the resources hosted by the one or more first communications devices 101, 103, 105 has a unique name in a namespace. A namespace is a set of names that are used to identify and refer to resources. A name may be a string comprising alphanumeric characters. According to an embodiment, the response may comprise an indication of the namespace.

According to an embodiment, the resources may be represented by LwM2M objects. If the one or more resources are represented by LwM2M objects, each object may be associated with a number, called Object ID, that identifies the resource. Therefore, a resource such as High Pressure Alarm of a Water Meter may be for example associated with the Object ID "/4321". According to an alternative embodiment, the one or more resources may be represented by OCF objects or Thread objects and use respective namespaces.

According to an embodiment, each name, and therefore each resource, may be associated with a bitstring. The bitstring associated with the name may be obtained by applying 307 one or more hash functions to the name to obtain one or more respective hash values. The one or more first communications devices apply the same one or more hash functions. Each of the one or more hash values may be a value comprised between 0 and a length of the BF minus 1. In other words, if the length of the BF is m, a hash function takes a name as input and generates a fixed-size output called hash value in the range [0, m-1]. Examples of hash functions comprise SHAx, MD5, and HMAC.

The bitstring associated with the name may be further obtained by encoding 309 the one or more respective hash values in the bitstring associated with the name. A length of the bitstring associated with the name is equal to the length of the BF (m).

According to an embodiment, the encoding 309 of the one or more respective hash values in the bitstring comprises, for each hash value, setting to 1 a corresponding bit of the bitstring.

The method 300 may further comprise determining 305, based on the one or more BFs, the first communications device 101, 103, 105 hosting one of the resources. According to an embodiment, the determining 305, based on the one or more BFs, the first communications device 101, 103, 105 hosting one of the resources comprises, for each bitstring associated with the respective name, calculating 311 a further bitstring. The further bitstring is obtained by performing bitwise logical operations between each of the one or more BFs associated with a respective first communications device 101, 103, 105 and the bitstring. The determining 305, based on the one or more BFs, the first communications device 101, 103, 105 hosting one of the resources further comprises determining 313 if the one of the resources is hosted by the one or more first communications devices 101, 103, 105 if each bit of the corresponding obtained further bitstring is equal to 0.

According to an embodiment, the calculating the further bitstring by performing bitwise logical operations between each of the one or more BFs associated with a respective first communications device 101, 103, 105 and the bitstring, comprises performing 315 a bitwise logical AND operation between each of the one or more BFs and the bitstring. The calculating the further bitstring further comprises, for each result of the bitwise logical AND operation, performing 317 a bitwise logical XOR operation between the result and the bitstring.

For example, if a resource, such as temperature, is associated with the 16-bit bitstring ID_temp = [0000 0100 0000 1000], and the BF associated with a first communications device 101 is [0000 0100 0100 1010], a second communications device 109 may verify if the resource temperature is hosted by the first communications device 101 by performing the following operations:

$$BF \text{ AND } ID\_temp \text{ XOR } ID\_temp =$$

On one hand, a resulting bitstring with all bits equal to 0 (as in the example) indicates that the resource is in the BF, and therefore that the resource is hosted by the first communications device 101, 103, 105 associated with the BF. However, the resulting bitstring may have all bits equal to 0 even though the resource is not in the BF. In this case the lookup of the resource returns a false positive. If the resulting bitstring has all bits equal to 0, but the resource is not hosted by the first communications device 101, 103, 105, when the second communications device 109 queries the first communications device 101, 103, 105 for the resource, the first communications device 101, 103, 105 will transmit a response indicating that the requested resource does not exist. Further information on false positives is provided below.

On the other hand, a resulting bitstring with one or more bits equal to 1 indicates that the resource is not in the BF, and therefore that the resource is not hosted by the first communications device 101, 103, 105 associated with the BF.

Alternatively, the determining 305, based on the one or more BFs, the first communications device 101, 103, 105 hosting one of the resources comprises performing a logical XOR operation between the BF and the bitstring associated with the resource and verifying if the result of the logical XOR operation is the same as the bitstring. For example, if a resource, such as temperature, is associated with the 16-bit bitstring ID_temp = [0000 0100 0000 1000], and the BF associated with a first communications device 101 is [0000 0100 0100 1010], a second communications device 109 may verify if the resource temperature is hosted by the first communications device 103, 105 by performing the following operations:

$$BF \text{ XOR } ID\_temp =$$
$$= [0000\ 0100\ 0100\ 1010] \text{ XOR } [0000\ 0100\ 0000\ 1000]$$
$$= [0000\ 0100\ 0000\ 1000] = ID\_temp$$

Also in this case, a positive result of the lookup (i.e., the result of the XOR operation is the same as the bitstring of the resource) may indicate that the resource is hosted by the first communications device 101, 103, 105 associated with the BF or it may be a false positive result. A negative result, (i.e., the result of the XOR operation is not the same as the bitstring of the resource) always indicates that the resource is not hosted by the first communications device 101, 103, 105 associated with the BF.

An advantage of the use of a BF to represent the resources hosted by a first communications device 101, 103, 105 is a fast resource discovery process, since verifying if a resource is comprised in the BF requires

- a logical AND operation between the BF and the bitstring associated with the resource, a logical XOR operation between the result of the AND operation and the bitstring associated with the resource, and verifying if the result of the logical XOR operation is an empty bitstring; or
- one logical XOR operation between the BF and a bitstring associated with the resource and verifying if the result of the logical XOR operation is the same as the bitstring.

According to an embodiment, the method 300 further comprises storing 319 the one or more BFs. Storing by the second communications device 109 a local copy of the one or more BFs allows the second communications device 109 to maintain search results from the RD with a small memory print.

It will be appreciated that the method 300 may comprise additional, alternative, or modified, steps in accordance with what is described throughout this disclosure.

The lookup of a resource in a BF may return a positive answer even though the resource is not in the BF, i.e., the lookup returns a false positive. A false positive may be returned if the bits of the BF corresponding to the hash values applied to a name associated with the resource are set to 1, but those bits were set to 1 by inserting different resources in the BF. Therefore, a positive BF lookup means that a resource may be hosted by a first communications device 101 associated with the BF with a certain probability (also referred as false positive probability). On the other hand, if the BF lookup returns a negative answer, it means that the resource is not in the BF, since a false negative answer may never occur. The false positive probability may be estimated with the following equation:

$$P = \left(1 - \left(1 - \frac{1}{m}\right)^{kn}\right)^{k}$$

wherein k is the number of hash functions, m is the BF length, and n is the number of resources in the BF. The design choice of k, m, and n, may be performed during an implementation phase.

Tables 1, 2, and 3, show the false positive probability calculated using the above equation for a single first communications device 101, such as an IoT device, using the following parameters:

- number of resources (n): 10, 20, and 30;
- number of hash functions (k): 3, 4, and 5; and
- BF size (m): 64, 128, and 256 bits.

Table 1 False positive probability; m = 64 bits

|  | k=3 | k=4 | k=5 |
| --- | --- | --- | --- |
| n = 10, m/n = 6.4 | 0.0524 | 0.0466 | 0.0468 |
| n = 20, m/n = 3.2 | 0.225 | 0.259 | 0.308 |
| n = 30, m/n = 2.1 | 0.430 | 0.514 | 0.604 |

Table 2 False positive probability; m = 128 bits

|  | k=3 | k=4 | k=5 |
| --- | --- | --- | --- |
| n = 10; m/n = 12.8 | 0.00912 | 0.00519 | 0.00354 |
| n = 20; m/n = 6.4 | 0.0524 | 0.0466 | 0.0468 |
| n = 30; m/n = 4.3 | 0.129 | 0.137 | 0.157 |

Table 3 False positive probability; m = 256 bits

|  | k=3 | k=4 | k=5 |
| --- | --- | --- | --- |
| n = 10; m/n = 25.6 | 0.00135 | 0.000438 | 0.000176 |
| n = 20; m/n = 12.8 | 0.00912 | 0.00519 | 0.00353 |
| n = 30; m/n = 8.5 | 0.0260 | 0.0196 | 0.0171 |

For example, with reference to Table 2, if the number of resources n added to the BF is 20, the BF length m is 128-bit, and the number of hash functions k is 4, the false positive probability is around 4.7%. A false positive probability around 4.7% means that if for example a second communications device 109 looks up for a resource in the BF and the result is positive, then the probability that the resource is not in the BF is about 4.7%. The second communications device sending a request to obtain the resource to the first communications device associated with the BF would result in a 4.7% probability that the first communications device will not return the resource, therefore resulting in an unnecessary request sent by the second communications device to the first communications device.

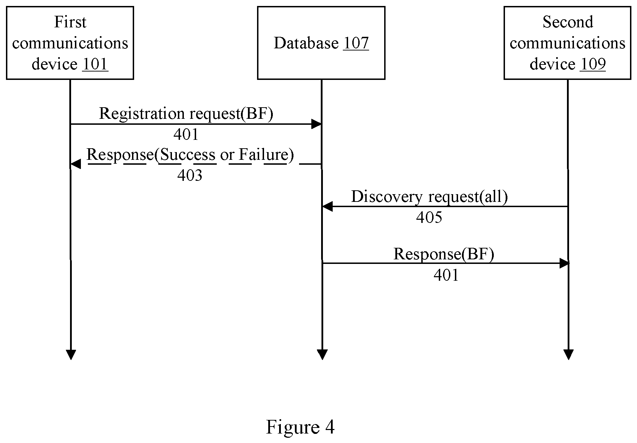

An example scenario in which the present invention may be practiced is in relation to a factory environment, where a set of first communications devices 101, 103, 105 may measure properties of the environment, such as water meters. A first communications device 101, 103, 105 according to embodiments of the invention may be an IoT device which registers the resources related to the water meters in a database 107, such as an RD. For example, Figure 4 shows an exchange of messages between a first communications device 101, e.g., an IoT device, a database 107, and a second communications device 109, such as a client device. The first communications device may have IP address [f9dc:1ed7:8685:7f2e:95a9:3988:db5f:6fec] and identification "node1", and registers resources related to water meter alarms by calculating the BF "1suaf3h", wherein "1suaf3h" is a binary to ascii conversion, and sending the following registration message 401, which here is exemplified as a CoAP POST registration message:

POST coap://rd.example.com/rd?ep=node1&et=bf.1suaf3h
Content-Format: 40
Payload:

</Water Meter Customer Leakage Alarm>;
</Water Meter Reverse Flow Alarm>;
</Water Meter Empty Pipe Alarm>;
</Water Meter Tamper Alarm>;
</Water Meter High Pressure Alarm>;
</Water Meter Low Pressure Alarm>

More specifically, the registration message may comprise

- endpoint identifier (ep = node1) indicating the name of the first communications device that wants to register the resources,
- endpoint type (et = bf.1suaf3h) indicating the BF;
- content format; and
- a list comprising the names of the resources.

After receiving the registration message, the RD may respond 403 with a response message comprising 2.01 (Created) or 201 (Created) and a location path of the entry of the BF in the RD. For example, the RD may send the following response message:

2.01 Created
Location-Path: /rd/18534

The registration message may also comprise an indication of the namespace. The indication may be added to the "et" field between the indication of the presence of the BF ("bf") and the BF ("1suaf3h"). For example, if the one or more resources are represented by LwM2M objects, the "et" field may be et=bf.1wm2m.1suaf3h. In this case, an example of a registration message 403 may be

POST coap://rd.example.com/rd?ep=node1&et=bf.1wm2m.1suaf3h
Content-Format: 40
Payload:
</4251>; </4265>; </4279>; </4293>; </4307>; </4321>

wherein </4251>; </4265>; </4279>; </4293>; </4307>; </4321> is the list of resource names obtained used Object IDs.
The second communications device may perform a lookup for all resources of all first communications devices of the factory environment by sending a GET message 405 comprising an indication of the BF and "all". An example of a discovery message may be
GET /rd-lookup/ep?et=bf.all
If the factory environment comprises the following three first communications devices, such as three IoT devices:

- a first IoT device with name "node1", IP address [f9dc:1ed7:8685:7f2e:95a9:3988:db5f:6fec], using the namespace "lwm2m", and associated with the BF "1suaf3h";
- a second IoT device with name "7376hdj", IP address [c169:a65c:41e2:cdf2:b413:1d00:8631:a73d], using the namespace "ocf" and associated with the BF "1suaf3h";
- a third IoT device with name "00009", IP address [6a2e:50d3:d6bc:1f7f:0d72:446c:0b80:c84a], using the namespace "thread", and associated with the BF "8sjhfdy",

a possible response message 401 from the database 107 to the second communications device may be:

```
2.05 Content
Payload:
    <coap://[f9dc:1ed7:8685:7f2e:95a9:3988:db5f:6fec]>;ep=node1&et=bf.1wm2
m.1suaf3 h;
    <coap://[c169:a65c:41e2:cdf2:b413:1d00:8631:a73d]>;ep=7376hdj&et=bf.oc
f.1suaf3h;
    <coap://[6a2e:50d3:d6bc:1f7f:0d72:446c:0b80:c84a];ep=00009&et=bfthread.
8sjhfdy
```

The second communications device may verify if, for example. a resource associated with an id </4251> is in the BF by extracting the BF from the response received from the RD and verifying if the resource is comprised in the BF.

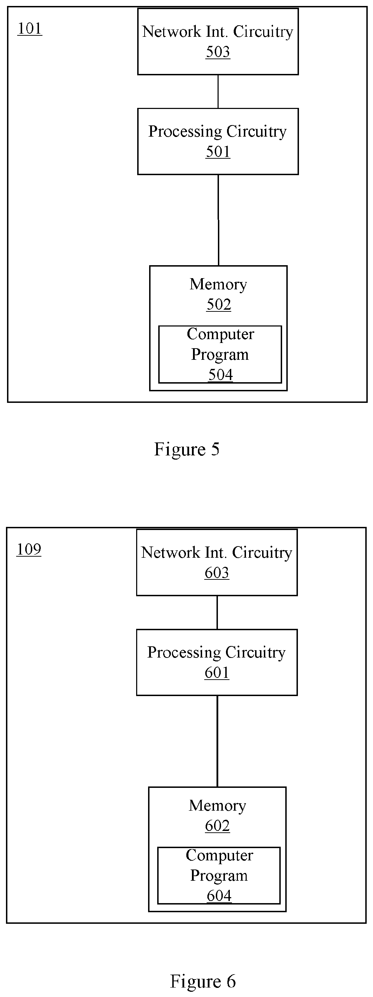

Figure 5 shows a block diagram illustrating an embodiment of the first communications device 101, 103, 105 comprising a processor circuitry 501, a computer-readable data carrier, such as the memory 502, and the network interface circuitry 503.

The processing circuitry 501 may comprise one or more processors, such as Central Processing Units (CPUs), microprocessors, application processors, application-specific processors, Graphics Processing Units (GPUs), and Digital Signal Processors (DSPs) including image processors, or a combination thereof, and the memory 502 comprising the computer program 504 comprising instructions. When executed by the processor(s), the instructions cause the first communications device 101 to become operative in accordance with embodiments of the invention described herein, in particular with reference to Figure 2. More specifically, the first communications device 101, 103, 105 becomes operative to calculate a BF indicating one or more resources hosted by a first communications device 101, 103, 105. The first communications device 101, 103, 105 becomes further operative to transmit 203, to a database 107, a request for registering the one or more resources. According to an embodiment, the request comprises the BF.

According to an embodiment, each of the one or more resources may have a unique name in a namespace.

According to a further embodiment, the request may comprise an indication of the namespace and the name of each of the one or more resources.

According to a further embodiment, the first communications device 101, 103, 105 may be operative to calculate the BF by applying 205, for each name, one or more hash functions to the name to obtain one or more respective hash values. According to an embodiment, a hash value may be a value between 0 and a length of the BF minus 1. According to an embodiment, each name may be associated with a bitstring.

According to an embodiment, the first communications device 101, 103, 105 may be operative to encode 207, for each bitstring, the one or more respective hash values in the bitstring. A length of the bitstring is equal to the length of the BF. The first communications device 101, 103, 105 may be further operative to perform 209 a bitwise logical OR operation between all bitstrings to obtain a bitstring representing the BF.

According to an embodiment, the first communications device 101, 103, 105 may be operative to encode the one or more respective hash values in the bitstring by setting to 1, for each hash value, a corresponding bit of the bitstring associated with the name.

According to an embodiment, the first communications device 101, 103, 105 may be operative to set 211, for each hash value of each name, to 1 a corresponding bit of a bitstring representing the BF.

According to an embodiment, the database 107 may be a RD. According to a further embodiment, the one or more resources are represented by LwM2M objects. According to a further embodiment, the first communications device 101, 103, 105 may be an IoT device. According to a further embodiment, the first communications device 101, 103, 105 may be an LwM2M device.

The computer program 504 may be stored in a computer-readable data carrier, such as a memory 502. Alternatively, the computer program 504 may be carried by a data carrier signal, e.g., downloaded to the memory 502 via a network interface circuitry 503.The memory 502 may, e.g., be a Random-Access Memory (RAM), a Read-Only Memory (ROM), a Flash memory, or the like. The computer program 504 may be downloaded to the memory 502 by means of the network interface circuitry 503, as a data carrier signal carrying the computer program 504. The network interface circuitry 503 may comprise one or more of a cellular modem (e.g., GSM, UMTS, LTE, 5G, or higher generation), a WLAN/Wi-Fi modem, a Bluetooth modem, an Ethernet interface, an optical interface, or the like, for exchanging data between the first communications device 101, 103, 105 and other computing devices, communications devices, a radio-access network, and/or the Internet. The processing circuitry 501 may alternatively or additionally comprise one or more Application-Specific Integrated Circuits (ASICs), Field-Programmable Gate Arrays (FPGAs), or the like, which are operative to cause the first communications device 101, 103, 105 to become operative in accordance with embodiments of the invention described herein.

Figure 6 is a block diagram illustrating an embodiment of the second communications device 109, comprising a processor circuitry 601, a computer-readable data carrier, such as the memory 602, and the network interface circuitry 603.

The processing circuitry 601 may comprise one or more processors, such as CPUs, microprocessors, application processors, application-specific processors, GPUs, and DSPs including image processors, or a combination thereof, and the memory 602 comprising the computer program 604 comprising instructions. When executed by the processor(s), the instructions cause the second communications device 109 to become operative in accordance with embodiments of the invention described herein, in particular with reference to Figure 3. More specifically, the second communications device 109 becomes operative to transmit 301, to a database 107, a request for discovering resources hosted by one or more first communications devices 101, 103, 105. The second communications device 109 is further operative to receive 303, from the database 107, a response comprising one or more BFs. Each of the one or more BFs indicates resources hosted by a respective first communications device 101, 103, 105 of the one or more first communications devices 101, 103, 105.

According to an embodiment, the second communications device 109 may be operative to determine 305, based on the one or more BFs, the first communications device 101, 103, 105 hosting one of the resources. Each of the resources hosted by the one or more first communications devices 101, 103, 105 may have a unique name in a namespace.

According to a further embodiment, the second communications device 109 may be further operative to obtain the bitstring by applying 307 one or more hash functions to the name to obtain one or more respective hash values. According to an embodiment, a hash value is a value between 0 and a length of the BF minus 1. The second communications device 109 may be further operative to obtain the bitstring by encoding 309 the one or more respective hash values in the bitstring. According to an embodiment, a length of the bitstring is equal to the length of the BF.

According to a further embodiment, the second communications device 109 may be operative to encode 309 the one or more respective hash values in the bitstring by, for each hash value, setting to 1 a corresponding bit of the bitstring.

According to a further embodiment, the second communications device 109 may be operative to determine 305, based on the one or more BFs, the first communications device hosting one of the resources by, for each bitstring, calculating 311 a further bitstring by performing bitwise logical operations between each of the one or more BFs associated with a respective first communications device 101, 103, 105 and the bitstring. The second communications device 109 may be further operative to determine 305, based on the one or more BFs, the first communications device hosting one of the resources by determining 313 if the one of the resources is hosted by the one or more first communications devices if each bit of the corresponding further bitstring is equal to 0.

According to an embodiment, the second communications device 109 may be operative to calculate the further bitstring by performing bitwise logical operations between each of the one or more BFs associated with a respective first communications device 101, 103, 105 and the bitstring by performing 315 a bitwise logical AND operation between each of the one or more BFs and the bitstring.

The second communications device 109 may be further operative to calculate the further bitstring by, for each result of the bitwise logical AND operation, performing 317 a bitwise logical XOR operation between the result and the bitstring.

According to an embodiment, the second communications device 109 may be operative to store 319 the one or more BFs.

According to an embodiment, the response comprises an indication of the namespace. According to a further embodiment, the database 107 may be RD. According to a further embodiment, the one or more resources may be represented by LwM2M objects. According to a further embodiment, the second communications device 109 may be a client device.

The computer program 604 may be stored in a computer-readable data carrier, such as a memory 602. Alternatively, the computer program 604 may be carried by a data carrier signal, e.g., downloaded to the memory 602 via a network interface circuitry 603. The memory 602 may, e.g., be a RAM, a ROM, a Flash memory, or the like. The computer program 604 may be downloaded to the memory 602 by means of the network interface circuitry 603, as a data carrier signal carrying the computer program 604. The network interface circuitry 603 may comprise one or more of a cellular modem (e.g., GSM, UMTS, LTE, 5G, or higher generation), a WLAN/Wi-Fi modem, a Bluetooth modem, an Ethernet interface, an optical interface, or the like, for exchanging data between the second communications device 203 and other computing devices, communications devices, a radio-access network, and/or the Internet. The processing circuitry 601 may alternatively or additionally comprise one or more ASICs, FPGAs, or the like, which are operative to cause the second communications device 203 to become operative in accordance with embodiments of the invention described herein.

## Claims

1. A method (200) for registering one or more resources hosted by a first communications device (101, 103, 105), the method performed by a first communications device (101, 103, 105) and comprising:

- calculating (201) a Bloom filter, BF, indicating the one or more resources hosted by the first communications device (101,103, 105), wherein each of the one or more resources has a unique name in a namespace, wherein the calculating the BF comprises:

- for each name, applying (205) one or more hash functions to the name to obtain one or more respective hash values; and

- transmitting (203), to a database (107), a request for registering the one or more resources, wherein the request comprises the BF.

2. The method (200) according to claim 1, wherein the request comprises an indication of the namespace and the name of each of the one or more resources.

3. The method (200) according to any of claims 1 or 2, wherein each of the one or more respective hash values is a value between 0 and a length of the BF minus 1.

4. The method (200) according to any of claims 1 to 3, wherein each name is associated with a bitstring.

5. The method (200) according to claim 4, further comprising:

- for each bitstring, encoding (207) the one or more respective hash values in the bitstring, wherein a length of the bitstring is equal to the length of the BF; and
- performing (209) a bitwise logical OR operation between all bitstrings to obtain a bitstring representing the BF.

6. The method (200) according to claim 4, further comprising:

- for each hash value of each name, setting (211) to 1 a corresponding bit of a bitstring representing the BF.

7. A method (300) for discovering resources hosted by one or more first communications devices (101, 103, 105), the method performed by a second communications device (109) and comprising:

- transmitting (301), to a database (107), a request for discovering the resources; and
- receiving (303), from the database (107), a response comprising one or more Bloom filters, BFs, wherein each of the one or more BFs indicates resources hosted by a respective first communications device (101, 103, 105) of the one or more first communications devices (101, 103, 105).

8. The method (300) according to claim 7, further comprising:

- determining (305), based on the one or more BFs, the first communications device (101, 103, 105) hosting one of the resources.

9. The method (300) according to any of claims 7 or 8, wherein each of the resources hosted by the one or more first communications devices (103, 105) has a unique name in a namespace.

10. A first communications device (101, 103, 105) for registering one or more resources hosted by the first communications device (101, 103, 105), the first communications device (101, 103, 105) comprising a processor and a memory, the memory having stored thereon instructions executable by the processor, wherein the instructions, when executed by the processor, cause the first communications device (101, 103, 105) to:

- calculate (201) a Bloom filter, BF, indicating the one or more resources hosted by the first communications device (101, 103, 105), wherein each of the one or more resources has a unique name in a namespace, wherein the instructions cause the first communications device (1012, 103, 105) to calculate the BF by:

- for each name, applying (205) one or more hash functions to the name to obtain one or more respective hash values; and

- transmit (203), to a database (107), a request for registering the one or more resources, wherein the request comprises the BF.

**11.** A second communications device (109) for discovering resources hosted by one or more first communications devices (101, 103, 105), the second communications device (109) comprising a processor and a memory, the memory having stored thereon instructions executable by the processor, wherein the instructions, when executed by the processor, cause the second communications device (109) to:

- transmit (301), to a database (107), a request for discovering the resources; and
- receive (303), from the database (107), a response comprising one or more Bloom filters, BFs, wherein each of the one or more BFs indicates resources hosted by a respective first communications device (101, 103, 105) of the one or more first communications devices (101, 103, 105).

**12.** A computer program (504) comprising instructions which, when run in a processing unit of a first communications device (101), cause the first communications device (101) to:

- calculate (201) a Bloom filter, BF, indicating the one or more resources hosted by the first communications device (101, 103, 105) wherein each of the one or more resources has a unique name in a namespace, wherein the instructions cause the first communications device (1012, 103, 105) to calculate the BF by:

  - for each name, applying (205) one or more hash functions to the name to obtain one or more respective hash values; and

- transmit (203), to a database (107), a request for registering the one or more resources, wherein the request comprises the BF.

**13.** A computer program (604) comprising instructions which, when run in a processing unit of a second communications device (109), cause the second communications device (109) to:

- transmit (301), to a database (107), a request for discovering resources hosted by one or more first communications devices (101, 103, 105); and
- receive (303), from the database (107), a response comprising one or more Bloom filters, BFs, wherein each of the one or more BFs indicates resources hosted by a respective first communications device (101, 103, 105) of the one or more first communications devices (101, 103, 105).

**14.** A computer-readable data carrier (502, 602) having stored thereon the computer program (504, 604) according to claims 12 or 13.

**15.** A data carrier signal carrying the computer program (504, 604) according to claims 12 or 13.

**Patentansprüche**

**1.** Verfahren (200) zur Registrierung einer oder mehrerer Ressourcen, die von einer ersten Kommunikationsvorrichtung (101, 103, 105) gehostet werden, wobei das Verfahren von einer ersten Kommunikationsvorrichtung (101, 103, 105) durchgeführt wird und Folgendes umfasst:

- Berechnen (201) eines Bloom-Filters, BF, der die eine oder die mehreren Ressourcen angibt, die von der ersten Kommunikationsvorrichtung (101, 103, 105) gehostet werden, wobei jede der einen oder der mehreren Ressourcen einen eindeutigen Namen in einem Namensraum aufweist, wobei das Berechnen des BF Folgendes umfasst:

  - Anwenden (205) für jeden Namen einer oder mehrerer Hash-Funktionen auf den Namen, um einen oder mehrere jeweilige Hash-Werte zu erhalten; und

- Senden (203) einer Anforderung zum Registrieren der einen oder der mehreren Ressourcen an eine Datenbank (107), wobei die Anforderung den BF umfasst.

**2.** Verfahren (200) nach Anspruch 1, wobei die Anforderung eine Angabe des Namensraums und des Namens jeder der einen oder der mehreren Ressourcen umfasst.

3. Verfahren (200) nach einem der Ansprüche 1 oder 2, wobei jeder des einen oder mehreren jeweiligen Hash-Werte ein Wert zwischen 0 und einer Länge des BF minus 1 ist.

4. Verfahren (200) nach einem der Ansprüche 1 bis 3, wobei jeder Name mit einer Bitfolge assoziiert ist.

5. Verfahren (200) nach Anspruch 4, ferner umfassend:

    - für jede Bitfolge Codieren (207) des einen oder der mehreren jeweiligen Hash-Werte in der Bitfolge, wobei eine Länge der Bitfolge gleich der Länge des BF ist; und
    - Durchführen (209) einer bitweisen logischen ODER-Operation zwischen allen Bitfolgen, um eine Bitfolge zu erhalten, die den BF darstellt.

6. Verfahren (200) nach Anspruch 4, ferner umfassend:

    - für jeden Hash-Wert jedes Namens Setzen (211) eines entsprechenden Bits einer Bitfolge, die den BF darstellt, auf 1.

7. Verfahren (300) zur Erkennung von Ressourcen, die von einer oder mehreren ersten Kommunikationsvorrichtungen (101, 103, 105) gehostet werden, wobei das Verfahren von einer zweiten Kommunikationsvorrichtung (109) durchgeführt wird und Folgendes umfasst:

    - Senden (301) einer Anforderung zum Erkennen der Ressourcen an eine Datenbank (107); und
    - Empfangen (303) einer Antwort, die einen oder mehrere Bloom-Filter, BFs, umfasst, von der Datenbank (107), wobei jeder des einen oder der mehreren BFs Ressourcen angibt, die von einer jeweiligen ersten Kommunikationsvorrichtung (101, 103, 105) der einen oder der mehreren ersten Kommunikationsvorrichtungen (101, 103, 105) gehostet werden.

8. Verfahren (300) nach Anspruch 7, ferner umfassend:

    - Bestimmen (305) der ersten Kommunikationsvorrichtung (101, 103, 105), die eine der Ressourcen hostet, basierend auf dem einen oder den mehreren BFs.

9. Verfahren (300) nach einem der Ansprüche 7 oder 8, wobei jede der Ressourcen, die von der einen oder den mehreren ersten Kommunikationsvorrichtungen (103, 105) gehostet werden, einen eindeutigen Namen in einem Namensraum aufweist.

10. Erste Kommunikationsvorrichtung (101, 103, 105) zum Registrieren einer oder mehrerer Ressourcen, die von der ersten Kommunikationsvorrichtung (101, 103, 105) gehostet werden, wobei die erste Kommunikationsvorrichtung (101, 103, 105) einen Prozessor und einen Speicher umfasst, wobei der Speicher darauf gespeicherte Anweisungen aufweist, die von dem Prozessor ausgeführt werden können, wobei die Anweisungen bei Ausführung durch den Prozessor die erste Kommunikationsvorrichtung (101, 103, 105) zu Folgendem veranlassen:

    - Berechnen (201) eines Bloom-Filters, BF, der die eine oder die mehreren Ressourcen angibt, die von der ersten Kommunikationsvorrichtung (101, 103, 105) gehostet werden, wobei jede der einen oder der mehreren Ressourcen einen eindeutigen Namen in einem Namensraum aufweist, wobei die Anweisungen die erste Kommunikationsvorrichtung (1012, 103, 105) veranlassen, den BF zu berechnen durch:

        - Anwenden (205) für jeden Namen einer oder mehrerer Hash-Funktionen auf den Namen, um einen oder mehrere jeweilige Hash-Werte zu erhalten; und

        - Senden (203) einer Anforderung zum Registrieren der einen oder der mehreren Ressourcen an eine Datenbank (107), wobei die Anforderung den BF umfasst.

11. Zweite Kommunikationsvorrichtung (109) zum Erkennen einer oder mehrerer Ressourcen, die von einer oder mehreren ersten Kommunikationsvorrichtungen (101, 103, 105) gehostet werden, wobei die zweite Kommunikationsvorrichtung (109) einen Prozessor und einen Speicher umfasst, wobei der Speicher darauf gespeicherte Anweisungen aufweist, die von dem Prozessor ausgeführt werden können, wobei die Anweisungen bei Ausführung durch den Prozessor die zweite Kommunikationsvorrichtung (109) zu Folgendem veranlassen:

- Senden (301) einer Anforderung zum Erkennen der Ressourcen an eine Datenbank (107); und
- Empfangen (303) einer Antwort, die einen oder mehrere Bloom-Filter, BFs, umfasst, von der Datenbank (107), wobei jeder des einen oder der mehreren BFs Ressourcen angibt, die von einer jeweiligen ersten Kommunikationsvorrichtung (101, 103, 105) der einen oder der mehreren ersten Kommunikationsvorrichtungen (101, 103, 105) gehostet werden.

12. Computerprogramm (504), umfassend Anweisungen, die bei Ausführung in einer Verarbeitungseinheit einer ersten Kommunikationsvorrichtung (101) die erste Kommunikationsvorrichtung (101) zu Folgendem veranlassen:

- Berechnen (201) eines Bloom-Filters, BF, der die eine oder die mehreren Ressourcen angibt, die von der ersten Kommunikationsvorrichtung (101, 103, 105) gehostet werden, wobei jede der einen oder der mehreren Ressourcen einen eindeutigen Namen in einem Namensraum aufweist, wobei die Anweisungen die erste Kommunikationsvorrichtung (1012, 103, 105) veranlassen, den BF zu berechnen durch:

- Anwenden (205) für jeden Namen einer oder mehrerer Hash-Funktionen auf den Namen, um einen oder mehrere jeweilige Hash-Werte zu erhalten; und

- Senden (203) einer Anforderung zum Registrieren der einen oder der mehreren Ressourcen an eine Datenbank (107), wobei die Anforderung den BF umfasst.

13. Computerprogramm (604), umfassend Anweisungen, die bei Ausführung in einer Verarbeitungseinheit einer zweiten Kommunikationsvorrichtung (109) die zweite Kommunikationsvorrichtung (109) zu Folgendem veranlassen:

- Senden (301) einer Anforderung zum Erkennen von Ressourcen, die von einer oder mehreren ersten Kommunikationsvorrichtungen (101, 103, 105) gehostet werden, an eine Datenbank (107); und
- Empfangen (303) einer Antwort, die einen oder mehrere Bloom-Filter, BFs, umfasst, von der Datenbank (107), wobei jeder des einen oder der mehreren BFs Ressourcen angibt, die von einer jeweiligen ersten Kommunikationsvorrichtung (101, 103, 105) der einen oder der mehreren ersten Kommunikationsvorrichtungen (101, 103, 105) gehostet werden.

14. Computerlesbarer Datenträger (502, 602), der das Computerprogramm (504, 604) nach Anspruch 12 oder 13 darauf gespeichert aufweist.

15. Datenträgersignal, das das Computerprogramm (504, 604) nach Anspruch 12 oder 13 trägt.

**Revendications**

1. Procédé (200) d'enregistrement d'une ou plusieurs ressources hébergées par un premier dispositif de communication (101, 103, 105), le procédé étant réalisé par un premier dispositif de communication (101, 103, 105) et comprenant :

- le calcul (201) d'un filtre de Bloom, BF, indiquant les une ou plusieurs ressources hébergées par le premier dispositif de communication (101, 103, 105), dans lequel chacune des une ou plusieurs ressources présente un nom unique dans un espace de nom, dans lequel le calcul du BF comprend :

- pour chaque nom, l'application (205) d'une ou plusieurs fonctions de hachage au nom pour obtenir une ou plusieurs valeurs de hachage respectives ; et

- la transmission (203), à une base de données (107), d'une demande d'enregistrement des une ou plusieurs ressources, dans lequel la demande comprend le BF.

2. Procédé (200) selon la revendication 1, dans lequel la demande comprend une indication de l'espace de nom et le nom de chacune des une ou plusieurs ressources.

3. Procédé (200) selon la revendication 1 ou 2, dans lequel chacune des une ou plusieurs valeurs de hachage respectives présente une valeur entre 0 et une longueur du BF moins 1.

**4.** Procédé (200) selon l'une quelconque des revendications 1 à 3, dans lequel chaque nom est associé à une chaîne binaire.

**5.** Procédé (200) selon la revendication 4, comprenant en outre :

- pour chaque chaîne binaire, le codage (207) des une ou plusieurs valeurs de hachage respectives dans la chaîne binaire, dans lequel une longueur de la chaîne binaire est égale à la longueur du BF ; et
- la réalisation (209) d'une opération OU logique bit par bit entre toutes les chaînes binaires pour obtenir une chaîne binaire représentant le BF.

**6.** Procédé (200) selon la revendication 4, comprenant en outre :

- pour chaque valeur de hachage de chaque nom, la définition (211) à 1 d'un bit correspondant d'une chaîne binaire représentant le BF.

**7.** Procédé (300) de découverte de ressources hébergées par un ou plusieurs premiers dispositifs de communication (101, 103, 105), le procédé étant réalisé par un deuxième dispositif de communication (109) et comprenant :

- la transmission (301), à une base de données (107), d'une demande de découverte des ressources ; et
- la réception (303), depuis la base de données (107), d'une réponse comprenant un ou plusieurs filtres de Bloom, BF, dans lequel chacun des un ou plusieurs BF indique des ressources hébergées par un premier dispositif de communication (101, 103, 105) respectif parmi les un ou plusieurs premiers dispositifs de communication (101, 103, 105).

**8.** Procédé (300) selon la revendication 7, comprenant en outre :

- la détermination (305), sur la base des un ou plusieurs BF, du premier dispositif de communication (101, 103, 105) hébergeant l'une des ressources.

**9.** Procédé (300) selon la revendication 7 ou 8, dans lequel chacune des ressources hébergées par les un ou plusieurs premiers dispositifs de communication (103, 105) présente un nom unique dans un espace de nom.

**10.** Premier dispositif de communication (101, 103, 105) pour enregistrer une ou plusieurs ressources hébergées par le premier dispositif de communication (101, 103, 105), le premier dispositif de communication (101, 103, 105) comprenant un processeur et une mémoire sur laquelle sont stockées des instructions exécutables par le processeur, dans lequel les instructions, lorsqu'elles sont exécutées par le processeur, amènent le premier dispositif de communication (101, 103, 105) à :

- calculer (201) un filtre de Bloom, BF, indiquant les une ou plusieurs ressources hébergées par le premier dispositif de communication (101, 103, 105), dans lequel chacune des une ou plusieurs ressources présente un nom unique dans un espace de nom, dans lequel les instructions amènent le premier dispositif de communication (1012, 103, 105) à calculer le BF par :

- pour chaque nom, l'application (205) d'une ou plusieurs fonctions de hachage au nom pour obtenir une ou plusieurs valeurs de hachage respectives ; et

- transmettre (203), à une base de données (107), une demande d'enregistrement des une ou plusieurs ressources, dans lequel la demande comprend le BF.

**11.** Deuxième dispositif de communication (109) pour découvrir des ressources hébergées par un ou plusieurs premiers dispositifs de communication (101, 103, 105), le deuxième dispositif de communication (109) comprenant un processeur et une mémoire sur laquelle sont stockées des instructions exécutables par le processeur, dans lequel les instructions, lorsqu'elles sont exécutées par le processeur, amènent le deuxième dispositif de communication (109) à :

- transmettre (301), à une base de données (107), une demande de découverte des ressources ; et
- recevoir (303), depuis la base de données (107), une réponse comprenant un ou plusieurs filtres de Bloom, BF, dans lequel chacun des un ou plusieurs BF indique des ressources hébergées par un premier dispositif de communication (101, 103, 105) respectif parmi les un ou plusieurs premiers dispositifs de communication (101, 103, 105).

12. Programme informatique (504) comprenant des instructions qui, lorsqu'elles sont exécutées dans une unité de traitement d'un premier dispositif de communication (101), amènent le premier dispositif de communication (101) à :

- calculer (201) un filtre de Bloom, BF, indiquant les une ou plusieurs ressources hébergées par le premier dispositif de communication (101, 103, 105), dans lequel chacune des une ou plusieurs ressources présente un nom unique dans un espace de nom, dans lequel les instructions amènent le premier dispositif de communication (1012, 103, 105) à calculer le BF par :

- pour chaque nom, l'application (205) d'une ou plusieurs fonctions de hachage au nom pour obtenir une ou plusieurs valeurs de hachage respectives ; et

- transmettre (203), à une base de données (107), une demande d'enregistrement des une ou plusieurs ressources, dans lequel la demande comprend le BF.

13. Programme informatique (604) comprenant des instructions qui, lorsqu'elles sont exécutées dans une unité de traitement d'un deuxième dispositif de communication (109), amènent le deuxième dispositif de communication (109) à :

- transmettre (301), à une base de données (107), une demande de découverte de ressources hébergées par un ou plusieurs premiers dispositifs de communication (101, 103, 105) ; et
- recevoir (303), depuis la base de données (107), une réponse comprenant un ou plusieurs filtres de Bloom, BF, dans lequel chacun des un ou plusieurs BF indique des ressources hébergées par un premier dispositif de communication (101, 103, 105) respectif parmi les un ou plusieurs premiers dispositifs de communication (101, 103, 105).

14. Support de données lisible par ordinateur (502, 602) sur lequel est stocké le programme informatique (504, 604) selon la revendication 12 ou 13.

15. Signal porteur de données portant le programme informatique (504, 604) selon la revendication 12 ou 13.

100

| First communications device 101 |

| First communications device 103 |

| First communications device 105 |

| Database 107 |

| Second communications device 109 |

Figure 1

200

Calculate a BF

For each name, apply one or more hash functions to the name — 205

For each bitstring, encode the one or more respective hash values in the bitstring — 207

For each hash value of each name, set to 1 a corresponding bit of a bitstring representing the BF — 201 / 211

Perform a bitwise logical OR operation between all bitstrings — 209

Transmit, to a database, a request for registering the one or more resources — 203

Figure 2

300 ⌐

Transmit, to a database, a request for discovering the resources ⌐ 301

Receive, from the database, a response comprising one or more BFs ⌐ 303

Apply one or more hash functions to the name to obtain one or more respective hash values ⌐ 307

Encode the one or more respective hash values in the bitstring ⌐ 309

Determine, based on the one or more BFs, the first communications device hosting one of the resources comprises

For each bitstring, calculate a further bitstring

315

Perform a bitwise logical AND operation ⌐ 311

317

For each result of the bitwise logical AND operation, perform a bitwise logical XOR operation ⊢ 305

Determine if the one of the resources is hosted by the one or more first communications devices if each bit of the corresponding obtained further bitstring is equal to 0 ⌐ 313

Store the one or more BFs ⌐ 319

Figure 3

Figure 4

101

Network Int. Circuitry
503

Processing Circuitry
501

Memory
502

Computer
Program
504

Figure 5

109

Network Int. Circuitry
603

Processing Circuitry
601

Memory
602

Computer
Program
604

Figure 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 2018032572 A1

**Non-patent literature cited in the description**

• **KHAEFI MUHAMMAD RIZAL et al.** Bloom filter based CoAP discovery protocols for distributed resource constrained networks. IEEE, 22 July 2015

• **NIKBAZM ROJIA et al.** Agent-based resource discovery in cloud computing using bloom filters. IEEE, 29 October 2014